# EUROPÄISCHE PATENTANMELDUNG

(11) **EP 3 812 665 A1**
(43) Veröffentlichungstag der Anmeldung: **28.04.2021**
(21) Anmeldenummer: 20182791.2
(22) Anmeldetag: 29.06.2020
(51) Int. Cl.: F24S 25/35, F24S 25/615, F24S 25/63, F24S 25/65, F24S 25/00, F24S 25/60, F24S 80/00

(54) **MODULMONTAGESYSTEM ZUR MONTAGE VON MODULEN AUF EINER LEICHTBAUHALLE**

(30) Priorität: 21.10.2019 CH 13252019
(71) Anmelder: KWenergy GmbH, 2560 Nidau (CH)
(72) Erfinder: Wehrli, Kilian, 2563 Ipsach (CH)
(74) Vertreter: AMMANN PATENTANWÄLTE AG

(57) **Zusammenfassung**

Das Modulmontagesystem zur Montage von Modulen (7), insbesondere Photovoltaikmodulen und/oder thermischen Solarmodulen, auf einer Leichtbauhalle, welche eine Fachwerkstruktur aus Fachwerkprofilen (1) und eine Membrane (2) als Dachabdeckung aufweist, umfasst mindestens ein Befestigungselement (4) umfasst, an welchem ein Modulträger (6) für ein Modul befestigbar ist, und mindestens ein an der Aussenseite der Membrane angebrachtes Haltemittel (3) zum Halten des mindestens einen Befestigungselements an der Membran.

## Beschreibung

Die vorliegende Erfindung betrifft ein Modulmontagesystem zur Montage von Modulen auf einer Leichtbauhalle, welche eine Fachwerkstruktur aus Fachwerkprofilen und eine Membrane als Dachabdeckung aufweist.

Aus dem Stand der Technik sind zur Montage von Energiemodulen diverse Montagesysteme für Schrägdächer auf dem Markt erhältlich. Jedoch ist keines dieser Systeme für Leichtbauhallen, aus z.B. Metall- oder Holzfachwerken und Membrane, geeignet. Würde man ein marktübliches System für solche Membrandächer benutzen, müssten diese Systeme modifiziert und mittels Fixierelemente, welche die Membrane durchdringen, befestigt werden.

Es ist eine Aufgabe der vorliegenden Erfindung, ein Modulmontagesystem für eine Leichtbauhalle bereitzustellen, welches die Montage eines Moduls möglichst ohne Durchdringung der Membran erlaubt.

Diese Aufgabe wird durch ein Modulmontagesystem nach Anspruch 1 erfüllt. Vorteilhafte Ausgestaltungen und verschiedene Ausführungsbeispiele sowie eine Leichtbauhalle mit einem Modulmontagesystem sind in den abhängigen Ansprüchen beschrieben.

Nach der vorliegenden Erfindung ist ein Modulmontagesystem mit mindestens einem Befestigungselement und mindestens einem an der Aussenseite der Membrane angebrachten Haltemittel vorgesehen, um ein Modulträger vorzugsweise auf eine schnelle und unkomplizierte Weise verbinden zu können. Der Modulträger ist z.B. Teil eines Modulträgersystems zur Montage von Energiemodulen in Form von Photovoltaikmodulen und/oder thermischen Solarmodulen. Das Haltemittel ist ohne Durchdringung der Membrane an deren Aussenseite anbringbar. Beispielsweise ist das Haltemittel frei von einer die Membrane durchdringenden Schraube.

Das Modulmontagesystem weist beispielsweise Taschen, einseitig offene Laschen, Schnüre und/oder Fixationspunkte auf, die jeweils an den Positionen der Fachwerke angebracht werden können, an denen jeweils ein Befestigungselement, z.B. ein speziell dafür geeignetes Profil befestigt wird, welches mittels Haltemittel gehalten wird. Auf diese fixierten Profile werden anschliessend Modulträger, z.B. spezielle Profile, befestigt, welche bis zum nächsten Fachwerkteil freitragend oder minimal abgestützt sind. Die Rasterung der Fachwerkteile kann unterschiedliche Distanzen aufweisen. Nebst der Fixierung der Modulträgersysteme können auch Absturzsicherungssysteme, Servicewegesysteme und/oder Kabeltrassen integriert sein.

An der z.B. roll- oder faltbaren Membrane sind die Montagepunkte mit einer bestimmten Festigkeit mechanisch, thermisch oder chemisch verbunden. Die Montagepunkte sind idealerweise in der Grösse nach der Systemvariante so angepasst, dass z.B. Basisprofile problemlos fixiert werden können. Bei der Montage werden die darauf zu montierenden Profile nach der Fertigstellung der Leichtbauhalle auf die Membrane gebracht und mechanisch, thermisch oder chemisch befestigt.

Das Modulmontagesystem ist so ausgestaltbar, dass es eine einfache und schnelle Fixierung eines Modulträgers erlaubt, den Montageaufwand am Montageort verringert, einfach in der Handhabung ist und eine variable Positionierung der Module ermöglicht. Es sind auch Absturzsysteme, Servicewege und Kabelkanäle integrierbar.

In einer ersten Variante erfolgt die Fixierung mittels auf der Membrane angebrachter Taschen und Einschubprofilen, wobei durch ein zusätzliches Profil, das in einer Vertiefung im Einschubprofil befestigt wird, die Tasche gespannt werden kann. Das Modulprofil als Träger für ein Modul wird dann auf dem Einschubprofil befestigt.

In einer anderen Variante erfolgt die Fixierung mittels auf der Membrane angebrachter Taschen und Einschubprofilen, wobei durch ein zusätzliches Profil, das darüber gelegt wird, die Tasche gespannt werden kann. Das Modulprofil wird dann auf dem Einschubprofil befestigt.

In einer weiteren Variante kann auch ein Vorspannen der Einschubprofile über die Modulträger, z.B. Modulprofile, ausgeführt werden. Bei dieser Version werden die Einschubprofile mittels eines temporären Haltesystems an der Stelle gehalten, bis die Modulträger final montiert werden.

Gemäss noch einer weiteren Ausführungsvariante sind auf der Membrane Kunststoffschnüre angebracht, an welchen Basisprofile aufgeschoben oder geklemmt werden. Ein Basisprofil liefert eine Basis für einen Modulträger, z.B. Modulprofil, welches darauf montierbar ist.

Eine weitere Ausführungsvariante sieht auf der Membrane angebrachte Membranstreifen vor, wobei ein Basisprofil darauf aufgeschoben und/oder daran festgeklemmt wird zur Bildung einer Basis zur Montage der Modulträger, z.B. Modulprofile.

Eine zusätzliche Variante sieht Fixationspunkte vor, die auf der Membrane angebracht werden, an welchen Basisprofile, Stäbe und/oder Drahtseile befestigt werden. Auf diese können dann die Modulträger, z.B. Modulprofile angebracht werden.

Ein mechanisches Haltesystem ohne Taschen kann auch noch eine Variante darstellen. Darunter kann man sich eine Membrane vorstellen, welche eine oder mehrere vormontierte Befestigungselemente in Form von Pads hat, welche die Montage der Modulträger, z.B. Modulmontageprofile ermöglichen. Diese Pads können die mechanische Fixierung darstellen. Diese Pads müssen nicht zwingend in die Membrane eingebaut sein. Sie können auch Teil der Profile sein.

Nebst den oben erwähnten Lösungen sind auch noch andere Varianten möglich, welche nicht explizit in diesem Dokument erwähnt sind.

Die z.B. roll- oder faltbare Membrane kann auf grossen Flächen vorgefertigt werden. Bei der Installation können die zu verlegenden Stücke vorgängig ab Lager oder auch am Installationsort zugeschnitten werden. Die zu verlegenden Stücke werden auf der Fachwerkstruktur positioniert und gespannt. Feinabstimmungen können bei der Installation der Komponenten, wie Anschlagspunkte der Absturzsicherung oder des Modulmontagesystems, vorgenommen werden.

Das Modulmontagesystem ist zur Montage eines Energiemodulsystem oder mehrerer Energiemodulsysteme mit mehreren Energiemodulen verwendbar, die auf Modulträgern angeordnet sind, wobei ein Energiemodulsystem mit geraden Profilen als auch faltbar sein kann. Das Modulmontagesystem ist für alle Arten von flachen oder auch flexiblen, gebogenen Energiemodulen geeignet, insbesondere für Photovoltaikmodule und thermische Solarmodule.

Die Erfindung wird anhand mehrerer Ausführungsvarianten dargestellt. Die einzelnen technischen Merkmale einer Ausführungsvariante können durchaus auch in Kombination mit einer anderen Ausführungsvariante mit den dargelegten Vorteilen verwendet werden. Die Beschreibung der erfindungsgemässen technischen Merkmale ist daher nicht auf die jeweilige Ausführungsvariante beschränkt.

Vorteilhafte Ausführungsformen der Erfindung werden im Folgenden anhand der Zeichnungen dargestellt, die lediglich zur Erläuterung dienen und nicht einschränkend auszulegen sind. Aus den Zeichnungen offenbar werdende Merkmale der Erfindung sollen einzeln und in jeder Kombination als zur Offenbarung der Erfindung gehörend betrachtet werden. In den Zeichnungen zeigen:
- Fig. 1: eine schematische dreidimensionale Ansicht eines kompletten möglichen Aufbaus von Fachwerkstruktur zu Membrane bis hin zum Aufbau mit Kollektoren,
- Fig. 2: eine schematische zweidimensionale Ansicht einer ersten Ausführungsvariante ohne Kollektorprofil,
- Fig. 3: eine schematische zweidimensionale Ansicht einer zweiten Ausführungsvariante ohne Kollektorprofil,
- Fig. 4: eine schematische zweidimensionale Ansicht einer dritten Ausführungsvariante ohne Kollektorprofil,
- Fig. 5: eine schematische zweidimensionale Ansicht einer vierten Ausführungsvariante ohne Kollektorprofil, und
- Fig. 6: eine schematische zweidimensionale Ansicht einer fünften Ausführungsvariante ohne Kollektorprofil nach der Erfindung.

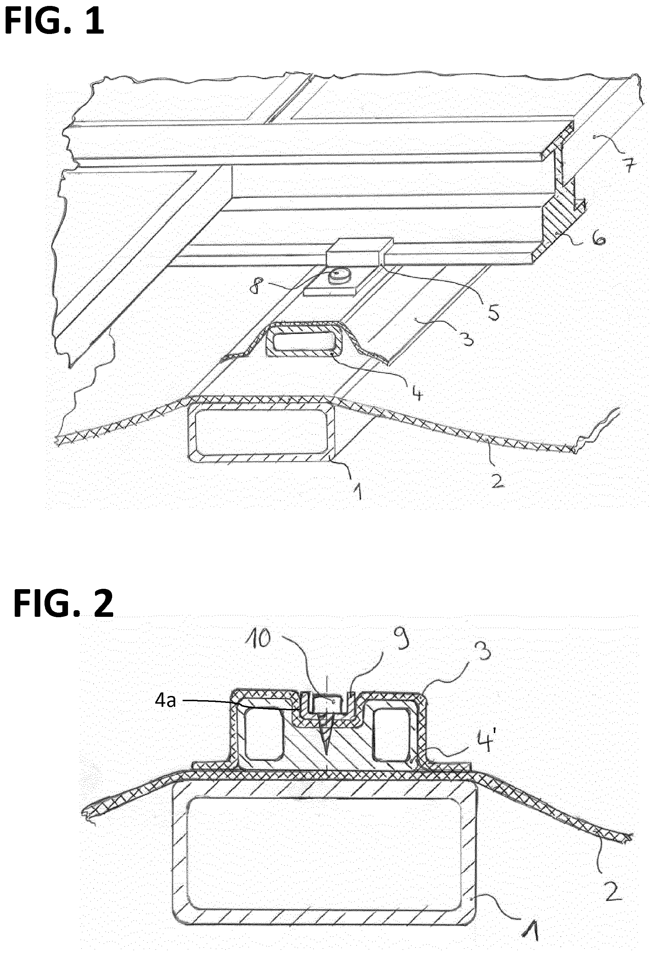

In den Figuren werden verschiedene Ausführungsvarianten vom Modulmontagesystemen auf Leichtbauhallen nach der Erfindung gezeigt. Bei der Zusammenstellung ist nur ein Beispiel von einer möglichen Anordnung aufgezeigt. Zudem können die Ausführungen von den Figuren abweichen. In den Figur 1 wird ein möglicher komplett Aufbau gezeigt. Figuren 2 bis 6 zeigen Varianten.

In der nachfolgenden Beschreibung sind beispielhaft Kollektorprofile 6 als Modulträger zum Anbringen von Kollektoren 7 erwähnt. Die Modulträger können auch anders gestaltet sein und zum Tragen von anderen Modulen, insbesondere Energiemodulen, dienen.

In Figur 1 ist ein möglicher kompletter Aufbau eines Modulmontagesystems für Leichtbauhallen gezeigt. Das Fachwerkprofil 1 gehört zur Fachwerkstruktur der Halle, auf der die Membrane 2 verlegt wird. Hier ist die Taschenvariante gezeigt, bei welcher die Einschubprofile 4 über die angebrachten Membranentaschen 3 gehalten werden. Die jeweilige Membranentasche 3 ist durch eine Membranlasche gebildet, welche an zwei Seiten mit der Membrane 2 verbunden ist. Mittels Klemmen 5, die durch eine Selbstbohrschraube 8 fixiert sind, werden die als Modulträger dienenden Kollektorprofile 6 gehalten. Das jeweilige Einschubprofil 4 dient als Befestigungselement, an welchem ein Modulträger 6 befestigt werden kann. Die Kollektoren 7 sind in dieser Variante in die Kollektorprofile 6 eingeschoben. Es gibt jedoch auch andere Montageprofillösungen zur Montage von Modulen.

In Figur 2 ist eine erste Ausführungsvariante des Modulmontagesystems für Leichtbauhallen mit einem zusätzlichen Spannprofil 9 gezeigt. Das Fachwerkprofil 1 gehört zur Fachwerkstruktur der Halle, auf der die Membrane 2 gezogen wird. Vorgängig sind an den Positionen der Fachwerkprofile 1 Membranentaschen 3 aufgebracht, in welche die Einschubprofile 4' nach der Fertigstellung der Halle geschoben werden. Diese werden anschliessend mittels innerem Spannprofil 9 und Selbstbohrschraube 10 fixiert, wodurch die Membranentaschen 3 gespannt werden. Zu diesem Zweck weist ein Einschubprofil 4' eine Vertiefung 4a auf, in welche das Spannprofil 9 einfügbar ist. Sobald alle Einschubprofile 4' sicher befestigt sind, können die Kollektorprofile 6 montiert und die Kollektoren 7 angebracht werden.

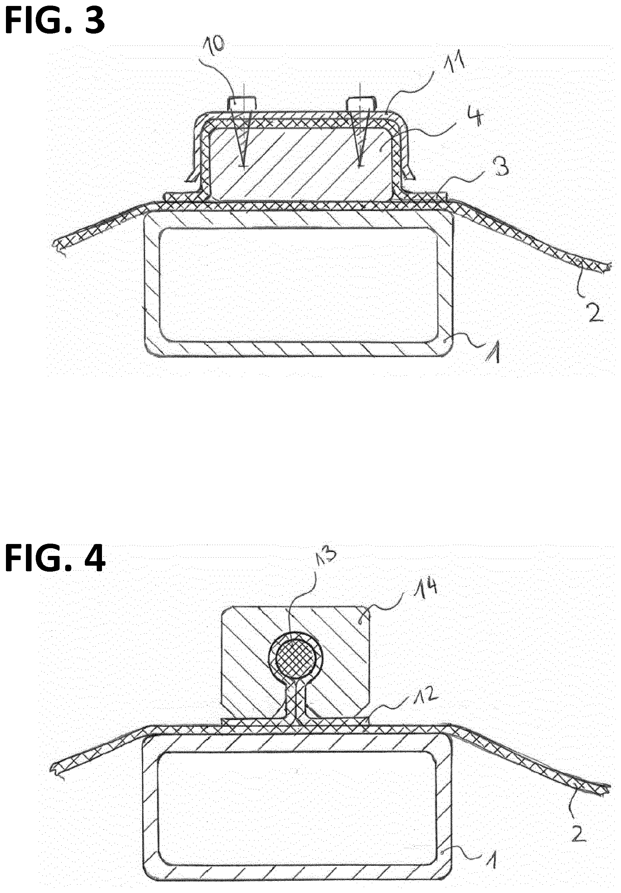

In Figur 3 ist eine weitere Ausführungsvariante des Modulmontagesystems für Leichtbauhallen mit einem zusätzlichen Spannprofil 11 gezeigt. Das Fachwerkprofil 1 gehört zur Fachwerkstruktur der Halle, auf der die Membrane 2 gezogen wird. Vorgängig sind an den Positionen der Fachwerkprofile 1 Membranentaschen 3 aufgebracht, in welche die Einschubprofile 4 nach der Fertigstellung der Halle geschoben werden. Diese werden anschliessend mittels äusserem Spannprofil 11 und Selbstbohrschraube 10 fixiert, wodurch die Membranentaschen 3 gespannt werden. Sobald alle Einschubprofile 4 sicher befestigt sind, können die Kollektorprofile 6 montiert und die Kollektoren 7 angebracht werden.

In Figur 4 ist eine weitere Ausführungsvariante des Modulmontagesystems für Leichtbauhallen mit einer Kunststoffschnur 13 gezeigt. Das Fachwerkprofil 1 gehört zur Fachwerkstruktur der Halle, auf der die Membrane 2 gezogen wird. Vorgängig sind an den Positionen der Fachwerkprofile 1 mittels Membranlaschen 12 Kunststoffschnüre 13 angebracht, auf welche dann jeweils ein Rundschnurbasisprofil 14 angebracht wird. Dies kann mittels Einzugsprozess oder als Klemmvariante gemacht werden. Sobald alle Rundschnurrbasisprofile 14 sicher befestigt sind, können die Kollektorprofile 6 montiert und die Kollektoren 7 angebracht werden. Ein Rundschnurbasisprofil 14 dient als Befestigungselement für einen Modulträger 6 und weist hier eine ebene Oberseite auf.

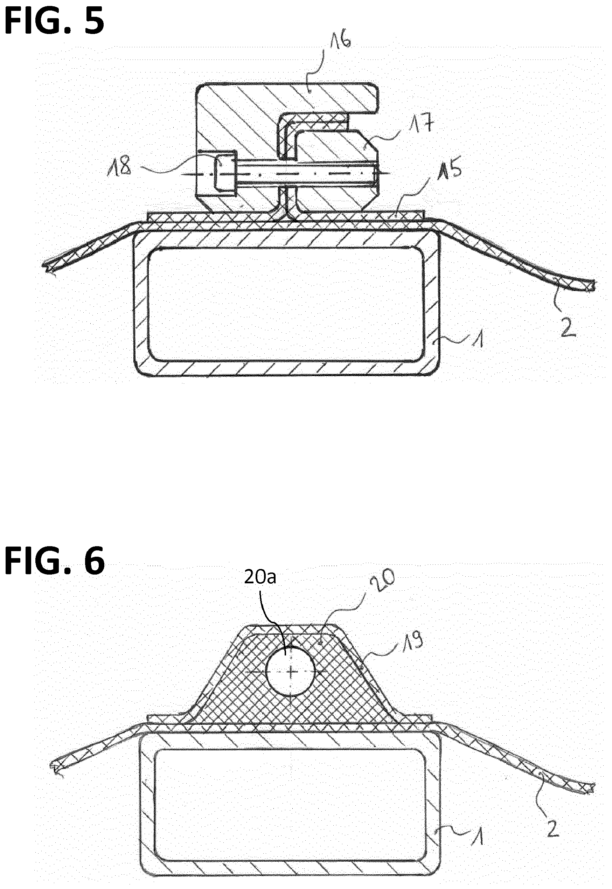

In Figur 5 ist eine weitere Ausführungsvariante des Modulmontagesystems für Leichtbauhallen mit einer doppelten Membranlasche 15 gezeigt. Das Fachwerkprofil 1 gehört zur Fachwerkstruktur der Halle, auf der die Membrane 2 gezogen wird. Vorgängig sind an den Positionen der Fachwerkprofile 1 doppelte Membranlaschen 15 angebracht, welche, wie hier dargestellt, offen, also aus zwei Stücken, oder geschlossen, aus einem Stück, sein können. Auf diese doppelten Membranlaschen 15 werden die Basisklemmprofile 16 und der Klemmklotz 17 mittels Klemmschraube 18 fixiert. Bei zwei Stücken, wie hier gezeigt, ist die jeweilige Membranlasche 15 nur an einer Seite mit der Membrane 2 verbunden, so dass ein freier Membranlaschenabschnitt gebildet ist, an welchem das Befestigungselement 16 befestigbar ist. Ist nur ein Stück vorgesehen, so wird dieses vorzugsweise an zwei Seiten mit der Membran 2 verbunden, so dass dazwischen ein Membranlaschenmittelteil gegeben ist zur Befestigung des Befestigungselements 16. Die Variante in Figur 5 zeigt eine abgewinkelte doppelte Membranlasche 15; eine andere Variante ist in Form einer geraden doppelten Membranlasche gegeben. Sobald alle Basisklemmprofile 16 sicher befestigt sind, können die Kollektorprofile 6 montiert und die Kollektoren 7 angebracht werden.

In Figur 6 ist eine weitere Ausführungsvariante des Modulmontagesystems für Leichtbauhallen mit Fixationspunkten 20 gezeigt. Das Fachwerkprofil 1 gehört zur Fachwerkstruktur der Halle, auf der die Membrane 2 gezogen wird. Vorgängig sind an den Positionen der Fachwerkprofile 1 Fixationspunkte in Form von Fixationskörpern 20, welche mit einer Membranlasche 19 verbunden sind, befestigt. Diese Fixationspunkte 20 können verschieden lang sein, abhängig von den möglichen Belastungen an den jeweiligen Punkten. Mittels dieser Fixationspunkte 20 kann entweder ein Drahtseil oder ein Rundprofil durch die runde Öffnung 20a im Fixationspunkt 20 gezogen werden. An dieses zusätzliche Drahtseil oder Rundprofil können die Kollektorprofile 6 montiert und die Kollektoren 7 angebracht werden. Drahtseil bzw. Rundprofil dienen als Befestigungselement, an welchem ein Modulträger 6 befestigbar ist.

Weitere Ausführungsbeispiele sind wie folgt:
Beispiel 1: Ein Modulmontagesystem für Leichtbauhallen, welches durch mindestens zwei Elemente, einem Einschubprofil 4 und einer auf die Membrane 2 aufgebrachten Membrantasche 3, die Montagebasis für die Kollektorprofile 6 bietet, wobei die Membrantaschen 3 mit den Einschubprofilen 4 jeweils an den Positionen der Fachwerkprofilen 1 positioniert sind und so das Kollektorsystem tragen und die Stabilität der kompletten Montage garantieren.
Beispiel 2: Ein Modulmontagesystem für Leichtbauhallen gemäss Beispiel 1, wobei mittels eines inneren Spannprofils 9 die Membrantasche 3 nach Einschub des Einschubprofils 4 gespannt wird und somit die Stabilität des kompletten Montagesystems erhöht, was als Basis für die Kollektorprofile 6 dient und so die Montage der Kollektoren 7 ermöglicht und garantiert.
Beispiel 3: Ein Modulmontagesystem für Leichtbauhallen gemäss Beispiel 1, wobei mittels eines äusseren Spannprofils 11 die Membrantasche 3 nach Einschub des Einschubprofils 4 gespannt wird und somit die Stabilität des kompletten Montagesystem erhöht, was als Basis für die Kollektorprofile 6 dient und so die Montage der Kollektoren 7 ermöglicht und garantiert.
Beispiel 4: Ein Modulmontagesystem für Leichtbauhallen z.B. gemäss Beispiel 1, wobei eine Kunststoffschnur 13 mittels Membranlasche 12 angebracht wird, über welche ein Rundschnurbasisprofil 14 angebracht wird, das als Basis für die Kollektorprofile 6 dient und so die Montage der Kollektoren 7 ermöglicht und garantiert.
Beispiel 5: Ein Modulmontagesystem für Leichtbauhallen z.B. gemäss Beispiel 1, wobei eine doppelte Membranlasche 15 angebracht wird, über welche ein Klemmsystem, basierend auf einem Basisklemmprofil 16, einem Klemmklotz 17 und Klemmschrauben 18 besteht, angebracht wird, das wiederum als Basis für die Kollektorprofile 6 dient und so die Montage der Kollektoren 7 ermöglicht und garantiert.
Beispiel 6: Ein Modulmontagesystem für Leichtbauhallen z.B. gemäss Beispiel 1, wobei Fixationspunkte 20 mittels Membranlaschen 19 angebracht sind, über welche Systeme wie Drahtseile oder Rundprofile durchgezogen werden, welche wiederum als Basis für die Kollektorprofile 6 dient und so die Montage der Kollektoren 7 ermöglicht und garantiert.

Mit dem Modulmontagesystem für Leichtbauhallen können z.B. Kollektoren oder andere Module über Profile und spezielle Fixierungsmöglichkeiten auf Membrandächern montiert werden. Es ermöglicht die Montage bei Neubauten als auch bei bestehenden Membrandächern. Die Montageart kann vorbereitet werden und ist am Montageort äusserst effizient.

Aus der vorangehenden Beschreibung sind dem Fachmann zahlreiche Abwandlungen zugänglich, ohne den Schutzbereich der Erfindung zu verlassen, der durch die Ansprüche definiert ist.

Bei der Variante gemäss Fig. 6 ist es z.B. denkbar, den Fixationskörper 20 als Befestigungselement zur Befestigung eines Modulträgers 6 zu verwenden. Zu diesem Zweck kann die Öffnung 20a weggelassen sein. In einer weiteren Variante kann die Membranlasche 19 weggelassen sein und der Fixationskörper 20 mittels eines Haltemittels an der Aussenseite der Membrane 2 gehalten sein. Das Haltemittel kann z.B. eine Hülle sein, die den Fixationskörper 20 umgibt und stoffschlüssig mit der Membrane 2 verbunden ist.

### Bezugszeichen

| | | | |
|---|---|---|---|
| 1 | Fachwerkprofil | | |
| 2 | Membrane | 12 | Membranlasche |
| 3 | Membranentasche | 13 | Kunststoffschnur |
| 4, 4' | Einschubprofil | 14 | Rundschnurbasisprofil |
| 4a | Vertiefung | 15 | doppelte Membranlasche |
| 5 | Klemme | 16 | Basisklemmprofil |
| 6 | Kollektorprofil | 17 | Klemmklotz |
| 7 | Kollektor | 18 | Klemmschraube |
| 8 | Selbstbohrschraube | 19 | Membranlasche |
| 9 | inneres Spannprofil | 20 | Fixationspunkt |
| 10 | Selbstbohrschraube | 20a | Öffnung |
| 11 | äusseres Spannprofil | | |

## Patentansprüche

1. Modulmontagesystem zur Montage von Modulen (7), insbesondere Photovoltaikmodulen und/oder thermischen Solarmodulen, auf einer Leichtbauhalle, welche eine Fachwerkstruktur aus Fachwerkprofilen (1) und eine Membrane (2) als Dachabdeckung aufweist, wobei das Modulmontagesystem
mindestens ein Befestigungselement (4, 4', 14, 16) umfasst, an welchem ein Modulträger (6) für ein Modul befestigbar ist, und
mindestens ein an der Aussenseite der Membrane angebrachtes Haltemittel (3, 12, 15, 19) zum Halten des mindestens einen Befestigungselements an der Membran.

2. Modulmontagesystem nach Anspruch 1, wobei das Haltemittel mindestens eine mit der Aussenseite der Membrane (2) verbundene Membranlasche (3, 12, 15, 19) und/oder eine stoffschlüssige Verbindung zwischen der Aussenseite der Membrane und dem mindestens einen Befestigungselement (4, 4', 14, 16) umfasst, vorzugsweise ist die Membranlasche an der Aussenseite der Membrane (2) mittels Schweissverbindung angebracht und/oder vorzugsweise ist die Membranlasche aus PVC.

3. Modulmontagesystem nach Anspruch 2, wobei die mindestens eine Membranlasche (3, 12, 19) an zwei Seiten mit der Membrane (2) verbunden ist und zwischen diesen Seiten einen Membranlaschenmittelteil aufweist zum Halten des Befestigungselements (4, 4', 14, 16).

4. Modulmontagesystem nach Anspruch 3, wobei der Membranlaschenmittelteil einen Innenraum bildet, in welchen zumindest teilweise das mindestens eine Befestigungselement (4, 4') und/oder eine Zusatzkomponente (19) aufnehmbar ist, und/oder wobei an der Aussenseite des Membranlaschenmittelteils das mindestens eine Befestigungselement (16) befestigbar ist.

5. Modulmontagesystem nach Anspruch 2, wobei die mindestens eine Membranlasche (15) nur an einer Seite mit der Membrane (2) verbunden ist, so dass ein freier Membranlaschenabschnitt gebildet ist, an welchem das mindestens eine Befestigungselement (16) befestigbar ist.

6. Modulmontagesystem nach Anspruch 5, welches zur Bildung einer Doppellasche mindestens eine weitere Membranlasche aufweist, die nur an einer Seite mit der Membrane (2) verbunden ist, so dass ein freier Membranlaschenabschnitt gebildet ist, an welchem das mindestens eine Befestigungselement (16) befestigbar ist.

7. Modulmontagesystem nach einem der vorangehenden Ansprüche, wobei das mindestens eine Befestigungselement ein Profil (4, 4', 14, 16), welches vorzugsweise eine ebene Oberseite als Auflager für den Modulträger (6) aufweist, oder ein Seil, vorzugsweise ein Drahtseil, ist.

8. Modulmontagesystem nach Anspruch 7, wobei das Profil ein Einschubprofil (4, 4'), welches in eine von der mindestens einen Membranlasche (3, 19) gebildete Membrantasche einfügbar ist, oder ein Basisprofil (14, 16) mit einer Ausnehmung, in welche zumindest teilweise die Membranlasche (12, 15) aufnehmbar ist, vorzugsweise weist das Basisprofil einen Längsschlitz auf, der in einem Zentraldurchgang als Ausnehmung mündet, und/oder eine L-förmige Seitenwand zur Bildung der Ausnehmung.

9. Modulmontagesystem nach einem der Ansprüche 2-8, welches mindestens eine der folgenden Zusatzkomponenten A1-A4 aufweist:
A1) ein Spannprofil (9), wobei mindestens ein Abschnitt der Membranlasche (3) zum Spannen derselben zwischen dem Spanprofil und dem mindestens einen Befestigungselement (4, 4') anordbar ist, vorzugsweise ist das Spannprofil (9) in einer Vertiefung (4a) im mindestens einen Befestigungselement (4') einfügbar oder vorzugsweise umgreift das Spannprofil (11) das mindestens eine Befestigungselement (4),
A2) eine Schnur (13), welche zumindest teilweise in einen von der mindestens einen Membranlasche (12) gebildeten Innenraum aufnehmbar ist, vorzugsweise ist die Schnur eine Kunststoffschnur und/oder vorzugsweise ist die Schnur in einer im mindestens einen Befestigungselement (14) gebildeten Ausnehmung zumindest teilweise aufnehmbar,
A3) ein Klemmsystem (17, 18) zum Befestigen des mindestens einen Befestigungselements (16) an einem Abschnitt der mindestens einen Membranlasche (15), vorzugweise ist der Abschnitt zwischen einem Klemmklotz (17) des Klemmsystems und dem Befestigungselement (16) festklemmbar,
A4) einen Fixationskörper (20), welcher zumindest teilweise in einen von der mindestens einen Membranlasche (19) gebildeten Innenraum aufnehmbar ist, vorzugsweise weist der Fixationskörper (20) einen Durchgang (20a) auf, durch welchen hindurch nach der Montage das mindestens eine Befestigungselement in Form eines Seils oder eines Profils hindurchverläuft.

10. Modulmontagesystem nach einem der vorangehenden Ansprüche, wobei das mindestens eine Befestigungselement (4, 4', 14, 16) mindestens eines der nachfolgenden Merkmale B1-B3 aufweist:
B1) einen Körper aus einem Material, das fest ist, so dass darin eine zur Befestigung des Modulträgers (6) hineingedrehte Selbstbohrschraube (8) gehalten ist,
B2) eine ebene Oberseite als Auflager für den Modulträger (6), B3) einen Innenkörper mit einer Aussenhülle, welche an der Membrane (2) gehalten ist.

11. Modulmontagesystem nach einem der vorangehenden Ansprüche, mit mehreren Befestigungselementen (4, 4', 14, 16), die mittels Haltemitteln (3, 12, 15, 19) an der Aussenseite der Membrane (2) gehalten sind und die vorzugsweise auf einem Raster angeordnet sind.

12. Leichtbauhalle, welche eine Fachwerkstruktur aus Fachwerkprofilen (1) und eine Membrane (2) zur Dachabdeckung aufweist und auf welcher ein Modulmontagesystem nach einem der vorangehenden Ansprüche montiert ist.

13. Leichtbauhalle nach Anspruch 12, wobei das mindestens eine Haltemittel (3, 12, 15, 19) des Modulmontagesystems in einem Bereich der Membrane (2) angeordnet ist, welcher auf einem Fachwerkprofil (1) aufliegt.

14. Leichtbauhalle nach Anspruch 12 oder 13, mit Modulträgern (6), die am Modulmontagesystem montiert sind, wobei die Modulträger Module(7) tragen, vorzugsweise Energiemodule, besonders bevorzugt Photovoltaikmodule und/oder thermische Solarmodule.
